# EUROPEAN PATENT SPECIFICATION

(11) **EP 4 002 685 B1**
(45) Date of publication and mention of the grant of the patent: **16.08.2023**
(21) Application number: 20382980.9
(22) Date of filing: 13.11.2020
(51) Int. Cl.: H02S 20/32

(54) **SINGLE AXIS SOLAR TRACKER AND OPERATING METHOD THEREOF**
EINACHSIGER SOLAR-TRACKER UND VERFAHREN ZU DESSEN BETRIEB
TRACKER SOLAIRE A AXE UNIQUE ET SON PROCEDE DE FONCTIONNEMENT

(43) Date of publication of application: 25.05.2022
(73) Proprietor: Soltec Innovations, S.L., 30500 Molina de Segura (ES)
(72) Inventor: Teruel Hernández, José Alfonso, 30500 Molina de Segura (ES)
(74) Representative: Isern Patentes y Marcas S.L.

(56) References cited:
- CN-A- 105 471 377
- CN-A- 105 871 319
- CN-A- 111 474 962
- ES-U- 1 243 445
- KR-B1- 100 941 458
- US-A1- 2011 186 040
- US-A1- 2013 340 807

## Description

### OBJECT OF THE INVENTION

The object of the invention generally pertains to the field of renewable energies.

A solar tracker for solar collectors for generating energy from the sun is hereby provided. In particular, the invention refers to a single axis horizontal solar tracker for bifacial solar modules being configured in such a way that the effects of wind on a solar tracker or array of solar trackers deployed on a solar plant are mitigated or reduced.

### BACKGROUND

Some solar collectors use a tracking system with which the collector can dynamically align the surface of the solar modules with the Sun and optimize the energy generated. If the collector is tracking the sun as it moves from east to west over the course of a day, the orientation of the collector can sometimes expose its structure to significant wind loads. As a result, the solar collector must be constructed with a more rigid structure and stronger supports, which increases the construction and / or installation costs of the collector. If the wind speed exceeds a threshold, the solar panel can even retreat into a congestion mode where suboptimal solar energy or no energy is detected. There is therefore a need for a solar collector that is less sensitive to wind loads to reduce the cost of the solar collector and to increase the time that the collector is actively tracking the sun.

Most of today's solar panels collect solar irradiance from only the front side of the panel, which faces the sun. Bifacial modules collect the light that enters from both the front and back sides of a solar panel. By converting both direct and reflected light into electricity, bifacial PV systems can generate more energy than a comparable monofacial system, depending on how and where the system is deployed. Even though bifacial cell technology has existed since it was invented in 1976 by Professor Antonio Luque and first manufactured by the company Isofoton in the early 80s, it has been hard to be commercially embraced due to the high production costs associated thereto. A drop in manufacturing costs, however, is now leading the solar industry to now consider the implementation of bifacial panels.

US8324496B1 discloses wind screens for reducing wind loading on one or more solar collectors. The wind screens move with the solar collector as the collector tracks the sun in one or more dimensions.

The wind screen pivotably connects to at least one solar panel of the collector. Another side of the wind screen may connect to the ground or to an adjacent collect, thus serving to divert wind over the collector. Wind screens may be made of various materials including rigid, flexible, or elastic materials and can change position, orientation, and/or effective length as the one or more collectors track the sun from East to West. In US8324496B1 there are one or more wind screens for shielding the solar collector from lateral winds. In some embodiments, the solar collector includes one or more solar panels that pivot about single axis to track the sun over the course of the day. The wind screen of US8324496B1 may comprise one or more screens that couple the outer edges of the panels to the ground to divert the wind over the collector. In some other embodiments, the solar collector includes an array of collectors in which solar units are arranged side-by-side. The wind screens then connect to adjacent solar collectors to provide a continuous surface across the array and inhibit wind from generating lift under any of the units. Of course, a combination of these ground-attached screens and cross-collector screens may be employed together to mitigate wind at the edges and interior of a solar collector array.

US9347692B2 discloses a system for providing solar energy collection with a modular design or array of solar energy collection devices or panels angled to the position of the sun. The solar collection systems devised in the invention have either a combination of fixed panels and tracking panels or only tracking panels, both kinds of panels converting sunlight incident upon them to electrical power. The tracking panels of the invention follow the daily movement of the sun to efficiently collect solar power from dawn to dusk. The invention includes systems for providing both single axis and dual axis solar tracking. The first axis of the system is used to track solar daily changes, the tracking panels adding power to the system when the sun is moving through zenith between approximately 10 AM to 2 PM. The shadowing of the tracking panels is minimal to zero at noon. The second axis of the system is used to adjust to solar seasonal changes by inclining the solar panel module or system to the appropriate angle. Both axes are driven by motors that are controlled by hardware and programmable software that seeks optimum angular positions both daily and seasonally. The system and software is designed to account for in site installation at any latitude to efficiently track the daily and/or seasonal positions. The systems in general are also designed to be sufficiently rugged to withstand forces of the elements such as wind, rain, etc., and to meet international and national building code specifications. In addition, the physical structure of the system is designed for ease of installation and maintenance because of its modular design. Such modular design of the solar panels of the invention allows connections to adjacent modules or arrays on a variety of sites such as residential roof tops, factory rooftops, large ground installations, on patio covers, car ports, parking lot shade structures etc.

WO2013021078 discloses a solar tracker comprising a base on which a solar panel is installed having first and second opposite ends which can be connected to said base by respective first and second mutually parallel axes by means of an automatic connection / disconnection device that connects the second end of the solar panel to the base at the same time that disconnects the first end of the solar panel of the base, and vice versa each time the solar panel reaches a position parallel to the base, so that the solar panel can pivot with respect to the base around said first axis when the first end is connected to the base and the second end is disconnected from the base and the solar panel can pivot relative to the base about said second axis when the second end is connected to the base and the first end is disconnected from the base. The solar tracker further comprises a lift mechanism connected to the solar panel in an intermediate region between said first and second ends and a lift / lower actuator operatively connected to move said lift mechanism and thereby pivot said panel alternately around the first axis and around the second axis passing through said position parallel to the base according to the relative movements of the sun. Thus, the lift / lower actuator and the lift mechanism are configured to pivot the solar panel between an elevated position and a position parallel to the base and the automatic on / off device is configured to reverse the tilt of the solar panel relative to the base each time the solar panel reaches the position parallel to the base and the lifting mechanism is actuated again to move the solar panel from the position parallel to the base towards the raised position.

Document US 20110061644 discloses a low-profile solar energy collecting system comprising a base for mounting the system on a suitable substrate and a plurality of solar panels arranged side by side on the base. A first group of solar panels are movable relative to a second group of solar panels to follow the relative movements of the sun during the day. The solar panels of the first group are arranged alternately with the solar panels of the second group. In one embodiment the solar panels of the second group are arranged stationary and, in another embodiment, they are movable relative to the solar panels of the first group. One drawback of this system is that at any given time only one group of solar panels, that is, only half of the solar panels receive the sun's rays under appropriate conditions.

Document CN 101098113 describes a solar tracker comprising a horizontal rotary support on which is installed a solar panel having a first lower end pivotally connected to the horizontal support by a horizontal axis. A first actuator drives rotational movements of the horizontal rotary support around a vertical axis to orient the solar panel in the east-west direction and a second actuator drives a lifting mechanism that pivots the solar panel with respect to the horizontal rotary support around said horizontal axis to orient the solar panel in the north-south direction according to the relative movements of the sun. One drawback of this solar tracker is that it needs two tracking mechanisms on two orthogonal axes, which is why it is complex and expensive.

While bifacial module technology increases power generation, there are some factors that may affect the rate of this increase. Among the most critical factors to consider when calculating bifacial module yield are module mounting height and albedo, or the fraction of light reflected by the surface. Module mounting height - The closer a bifacial PV array is to the ground or a roof surface, the less chance reflective light will reach the back of the array. A significant bifacial energy boost is possible, however, with a relatively modest height increase.

Documents CN105471377 (WANG) and US2011/186040 (LIAO) disclose solar tracking systems and methods according to the preamble of the independent claim.

### DESCRIPTION

The object of the invention is a solar tracking method using a single horizontal solar tracker associated to at least one bifacial photovoltaic module, according to claim 1.

The object of the invention provides a solution to the aforementioned problems. The object of the invention is a single axis tracker for bifacial modules providing the potential savings of a low-profile structure for solar tracking on a horizontal axis. It is understood that there will be significant savings in the use of structural material, usually steel, per peak power of installed photovoltaic modules. Thanks to the low profile of the solar tracker of the invention, wind resistance is reduced.

Being conceived solely for use with bifacial modules, the solar tracker of the invention is capable of making the most of bifacial solar modules; yielding a high-power generation ratio per weight kilogram of material employed for manufacturing the structure. Bifacial solar modules with a remarkably high bifaciality value, such as HJTs, are preferred.

The solar tracker with a single horizontal axis associated to at least one bifacial photovoltaic module hereby proposed comprises an arrangement of landscape oriented bifacial photovoltaic modules attached to the axis of rotation, torque tube, so that one of the sides of the panel, preferably long sides, remain integral with the axis of rotation in the longitudinal direction, so that the bifacial modules are fixed in an unbalanced way, being at maximum torque when they are positioned aligned with the horizontal plane; hence, a cantilever equivalent approximately to the width of the solar panels is defined thereby, being the standard width of solar modules set around 1 meter (40 inches) width.

The object of the invention is to be preferably deployed along with the solar module described in ES1243445, which priority is claimed disclosing a carrier frame for solar modules that is configured to be jointly fixed to the torque tube of a solar tracker in such a way that the frame, and consequently the photovoltaic module carried by the frame, jointly moves as the torque tube rotates. Hence the resulting solar module moves when the torque tube jointly travels with said frame jointly attached thereby.

The torque tube of the solar tracker of the invention would be located at a height with respect to the ground which would be equal to the minimum allowed in this type of solar plants between panels and ground, according to regulations or customer specification lower than than 1.5 m (typically around 0.5 meters, i.e. 20 inches).

The foundation to the ground of this solar tracker could be done in different ways, being able to use cold formed profile drives, extruded profiles, concrete footings, screws or any other alternative already on the market for solar trackers of a horizontal axis.

### DESCRIPTION OF THE INVENTION

FIGURE 1 - Shows a side view of solar tracker of the invention wherein the solar modules are in a vertical position, at a 0 degrees angle and the modules are arranged in landscape orientation.
FIGURE 2 - Shows a front view of solar tracker of the invention wherein the solar modules are in a vertical position, at a 0 degrees angle.
FIGURE 3 - Shows a front view of solar tracker of the invention wherein the solar modules are in a horizontal position, at a -90 degrees angle (figure 3a) and 90 degrees angle (figure 3b).
FIGURE 4 - Shows a front view diagram depicting a standard tracking procedure for a day.
FIGURE 5 - Shows a diagram depicting an array of solar trackers wherein the solar modules is set to a horizontal defensive position, facing the wind direction.
FIGURE 6.- Shows a 3D representation of the object of the invention wherein the torque tube is driven by an actuator arranged on the central post and the modules are arranged in portrait orientation.

### DETAILED DESCRIPTION

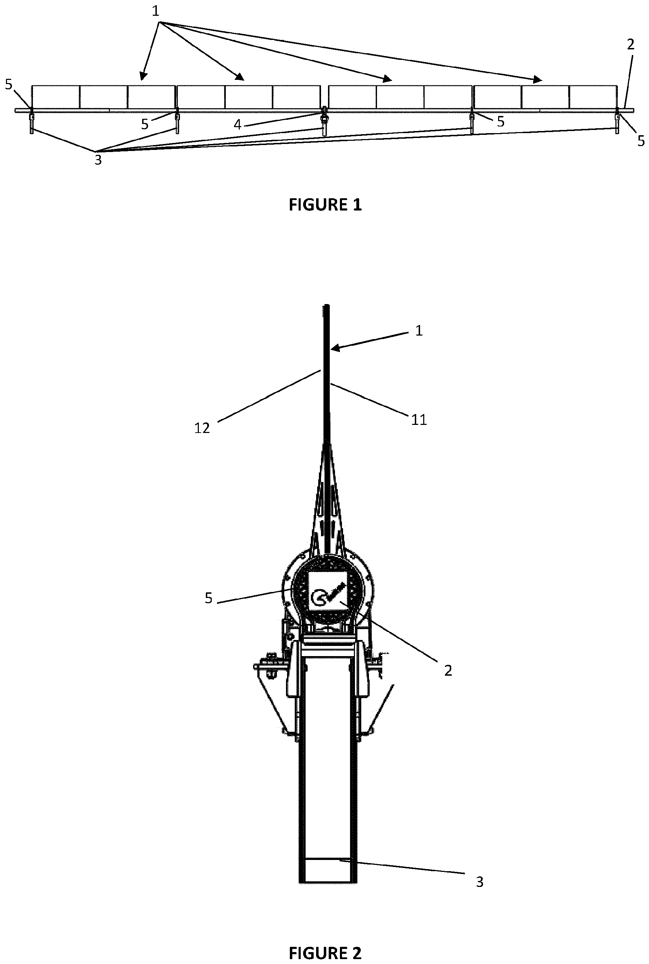

In a preferred embodiment of the object of the invention, a single horizontal axis solar tracker associated to at least one bifacial photovoltaic module (1) is provided as the one shown in figures 1 -3. For this preferred embodiment and in a non-limiting manner, the single horizontal axis solar tracker associated to at least one bifacial photovoltaic module (1) of the invention comprises said bifacial photovoltaic module (1) attached to the torque tube (2) by articulated joints, preferably by means of bearings (5). The solar tracker of the invention comprises the torque tube (2) supported by a post (3) fixed to the ground. Consequently, the solar tracker is fixed to the ground by means of posts (3) holding the torque tube (2); hence, any reference to angles is to be understood as being referred to the longitudinal axis of said posts (3).

The single horizontal axis solar tracker of the invention comprises the bifacial photovoltaic modules (1), preferably rectangular, with one of its sides, preferably a long one, jointly attached to the torque tube (2) so that one of the long sides of the module (1) remain integral with the torque tube (2) in the longitudinal direction, wherein the bifacial photovoltaic module (1) is fixed in an unbalanced way, being at maximum torque when the bifacial photovoltaic module (1) is positioned aligned with their horizontal plane; defining a cantilever preferably equivalent to approximately to the width of the bifacial photovoltaic module (1). In other words, the bifacial photovoltaic module (1) is associated to the torque tube (2) by means of a joint fixture along one of the sides of the bifacial solar module in such way that the solar module jointly moves when the torque tube (2) rotates.

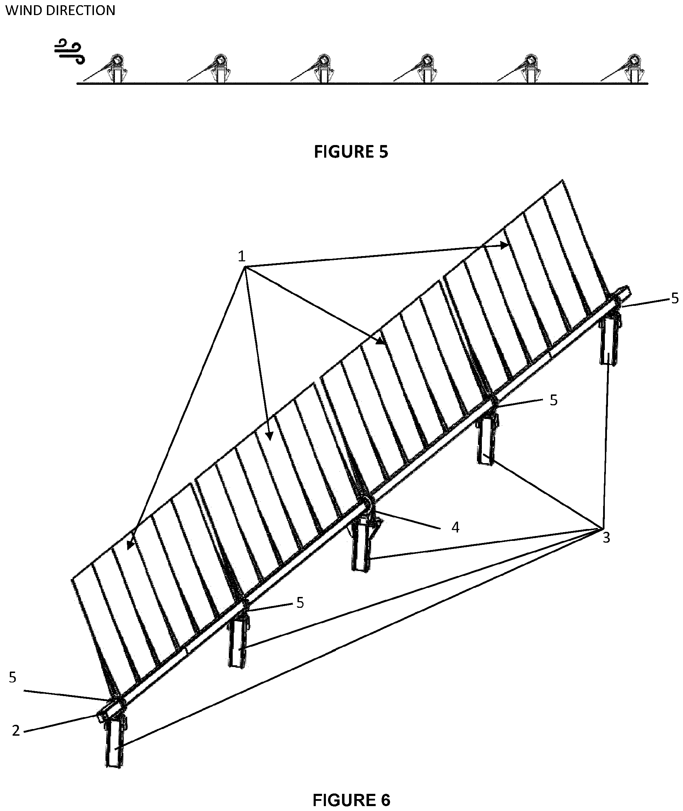

The solar tracker of the invention presents the torque tube (2) having a round section (as per figure 2) or a square section (as per figure 6) and arranged at a height above ground of around 0.5 meters (20 inches), having the bifacial photovoltaic module (1) a height of around 1 meter (40 inches), thus rendering a total height of around 1.5 meters (around 5 feet), allowing an easy deployment of the solar tracker without heavy and/or special machinery.

In a preferred embodiment of the object of the invention the torque tube (2) is driven by a motor or actuators (4) as in figure 6, this allows a controlled movement of the bifacial photovoltaic module (1).

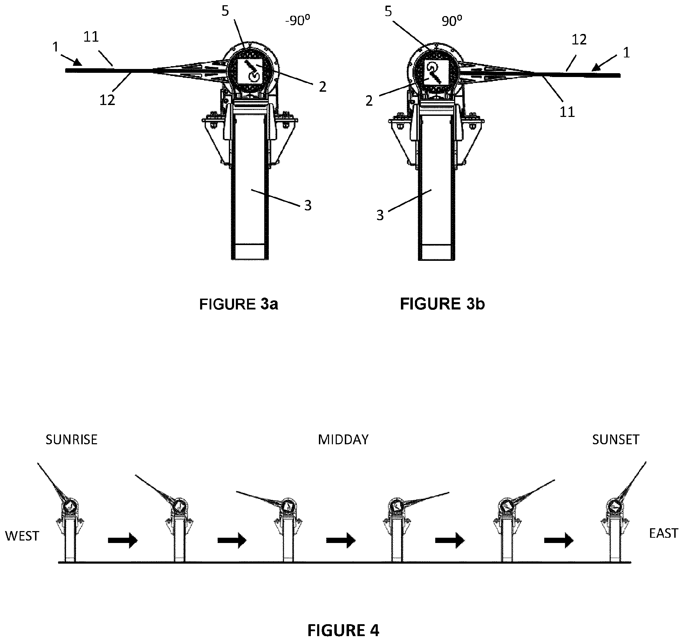

The method of the invention basically comprises gradually positioning, driven by the torque tube (2), the bifacial photovoltaic module (1) in such a way that the front face (11) of the bifacial photovoltaic module (1) faces the sun from dawn to noon and that the back face (12) of the bifacial photovoltaic module (1) faces the sun from noon to sunset as per figure 3a and 3b.

Using a clock hands pattern, the method of the invention may be described in view of figure 4 as follows:
- From dawn to noon, the solar tracker of the invention would start solar tracking mode in such a way that a front face (11) of the bifacial photovoltaic module (1) faces the sun, being gradually positioned at -90° with respect to the longitudinal axis of the post (3) at noon, shifting from a close to 12h to a close to 9h position of an hour hand in a watch. Rendering the situation depicted by figure 3a.
- After noon, it is required a movement from west to east so that the bifacial photovoltaic module (1) has a back face (12) of the bifacial photovoltaic module (1) facing the sun. With this movement the panels shift from close to 9h to a close to 3h position of an hour hand in a watch.
- Gradually positioning, from noon to sunset, the bifacial photovoltaic module (1) with its back face facing the sun to a position of 90° with respect to the longitudinal axis of the post (3), shifting from a close to 3h to a close to 12h position of an hour hand in a watch. Rendering the situation depicted by figure 3b.

Additionally, the method of the invention may comprise a backtracking operating mode, so that to avoid shadowing effects, in this preferred embodiment, the progressive movement of the bifacial photovoltaic module (1) driven by the torque tube (2) is limited by a limited angular range previously defined. This range will depend on the size and orientation of the bifacial photovoltaic module (1) over the torque tube (2) and the height of the torque tube (2) above the ground level. For a typical landscape orientation of standard modules and 20 inches or 0.5 meters of torque tube (2) height, the limited angular range would be 240 degrees (+/-120) from the vertical.

In case of high-speed winds, the bifacial photovoltaic module (1) can be placed in a horizontal position, essentially orthogonal in respect to the post (3), and even exceed that position to even touch the ground, as depicted in figure 5.

Furthermore, the method of the invention may further envisage arranging the bifacial photovoltaic module (1) in an essentially horizontal position in case high-speed winds are determined or at a minimum angular position to reach the angular limit in case high-speed winds are determined. This positioning embraces operating the solar tracker so the bifacial photovoltaic module (1) is moved to the east in case wind direction is determined to come mainly come from east or to the west in case wind direction is determined to mainly come from west.

Thanks to the low profile of this type of solar tracker, considerable savings in the use of material (mainly steel) are estimated, mainly due to its limited exposure to the wind. A detailed structural study is necessary to be able to evaluate the potential savings in the most key elements: torque tube (2), drives and actuators.

## Claims

1. A solar tracking method using a single horizontal axis solar tracker associated to at least one bifacial photovoltaic module (1),
the single horizontal axis solar tracker comprising an arrangement of bifacial photovoltaic modules (1) fixed to the torque tube (2), being the torque tube (2) supported by several posts by articulated joints (5) and those posts (3) fixed to the ground, the bifacial photovoltaic module (1) being associated to the torque tube (2) by means of a joint fixture along one of the sides of the bifacial solar module in such way that the solar module jointly moves when the torque tube (2) rotates;
the method comprising operating the torque tube (2) for gradually positioning the bifacial photovoltaic module (1) in such a way that either a front face (11) or a back face (12) of the bifacial photovoltaic module (1), faces the sun from dawn to noon;
wherein the front face (11) faces the sun from dawn to noon and the back face (12) faces the sun from noon to sunset.

2. The method of claim 1, further comprising the following steps:
- from dawn to noon, the solar tracker starts solar tracking mode in such a way that a front face (11) of the bifacial photovoltaic module (1) faces the sun, starting at down from a 0º position and being gradually positioned at -90° with respect to the longitudinal axis of the post (3) at noon;
- after noon, the bifacial module (1) is moved by 180º from west to east, until positioned at +90º, so that a back face (12) of the bifacial module (1) is facing the sun;
- gradually positioning, from noon to sunset, the bifacial photovoltaic module (1) with its back (12) face facing the sun to a position of 90° with respect to the longitudinal axis of the post (3).

3. The method of claim 2, further comprising operating the torque tube (2) for gradually positioning the bifacial photovoltaic module (1) in such a way that either the front face (11) or back face (12) of the bifacial photovoltaic module (1) faces the sun from noon to sunset.

4. The method of either claims 1-3, further comprising operating the torque tube (2) for arranging the bifacial photovoltaic module (1) essentially orthogonal in respect to the post (3) in case high-speed winds are determined.

5. The method of claim 4, further comprising operating the torque tube (2) for positioning the bifacial photovoltaic module (1) to an angular limit towards the east in case wind direction is determined to mainly come from east.

6. The method of claim 5, further comprising operating the torque tube (2) for positioning the bifacial photovoltaic module (1) to an angular limit towards the west in case wind direction is determined to mainly come from west.

## Patentansprüche

1. Solar-Tracking-Verfahren unter Verwendung eines Solar-Trackers mit einer einzigen horizontalen Achse, der mit mindestens einem bifazialen Photovoltaikmodul (1) verbunden ist,
wobei der Solar-Tracker mit einer einzigen horizontalen Achse eine Anordnung von bifazialen Photovoltaikmodulen (1) umfasst, die an dem Torsionsrohr (2) befestigt sind, wobei das Torsionsrohr (2) durch Gelenkverbindungen (5) von mehreren Pfosten getragen wird und diese Pfosten (3) auf dem Boden befestigt sind, wobei das bifaziale Photovoltaikmodul (1) mit dem Torsionsrohr (2) mittels einer Gelenkbefestigung entlang einer der Seiten des bifazialen Solarmoduls derart verbunden ist, dass sich das Solarmodul mitbewegt, wenn sich das Torsionsrohr (2) dreht;
wobei das Verfahren das Betätigen des Torsionsrohrs (2) umfasst, um das bifaziale Photovoltaikmodul (1) schrittweise so zu positionieren, dass entweder eine Vorderseite (11) oder eine Rückseite (12) des bifazialen Photovoltaikmoduls (1) vom Morgengrauen bis zum Mittag der Sonne zugewandt ist;
wobei die Vorderseite (11) vom Morgengrauen bis zum Mittag der Sonne zugewandt ist und die Rückseite (12) vom Mittag bis zum Sonnenuntergang der Sonne zugewandt ist.

2. Verfahren nach Anspruch 1, das ferner die folgenden Schritte umfasst:
- vom Morgengrauen bis zum Mittag startet der Solar-Tracker den Solar-Tracking-Modus in der Weise, dass eine Vorderseite (11) des bifazialen Photovoltaikmoduls (1) der Sonne zugewandt ist, wobei es von einer 0°-Position am Morgengrauen startet und schrittweise auf -90° bezüglich der Längsachse des Pfostens (3) am Mittag positioniert wird;
- nach dem Mittag wird das bifaziale Modul (1) um 180° von West nach Ost bewegt, bis es bei +90° positioniert ist, so dass eine Rückseite (12) des bifazialen Moduls (1) der Sonne zugewandt ist;
- schrittweises Positionieren des bifazialen Photovoltaikmoduls (1) vom Mittag bis zum Sonnenuntergang, wobei seine Rückseite (12) der Sonne zugewandt ist, in einer Position von 90° in Bezug auf die Längsachse des Pfostens (3).

3. Verfahren nach Anspruch 2, das ferner das Betätigen des Torsionsrohrs (2) umfasst, um das bifaziale Photovoltaikmodul (1) schrittweise so zu positionieren, dass entweder die Vorderseite (11) oder die Rückseite (12) des bifazialen Photovoltaikmoduls (1) vom Mittag bis zum Sonnenuntergang der Sonne zugewandt ist.

4. Verfahren nach einem der Ansprüche 1 bis 3, das ferner das Betätigen des Torsionsrohrs (2) umfasst, um das bifaziale Photovoltaikmodul (1) im Wesentlichen orthogonal zum Pfosten (3) anzuordnen, falls Windgeschwindigkeiten mit hoher Geschwindigkeit festgestellt werden.

5. Verfahren nach Anspruch 4, das ferner das Betätigen des Torsionsrohrs (2) umfasst, um das bifaziale Photovoltaikmodul (1) an einer Winkelgrenze in Richtung Osten zu positionieren, falls festgestellt wird, dass die Windrichtung hauptsächlich aus Osten kommt.

6. Verfahren nach Anspruch 5, das ferner das Betätigen des Torsionsrohrs (2) umfasst, um das bifaziale Photovoltaikmodul (1) an einer Winkelgrenze in Richtung Westen zu positionieren, falls festgestellt wird, dass die Windrichtung hauptsächlich aus Westen kommt.

## Revendications

1. Procédé de suivi solaire utilisant un seul suiveur solaire à axe horizontal associé à au moins un module photovoltaïque bifacial (1),
le seul suiveur solaire à axe horizontal comprenant un agencement de modules photovoltaïques bifaciaux (1) fixés au tube de torsion (2), le tube de torsion (2) étant supporté par plusieurs montants par des joints articulés (5) et ces montants (3) fixés au sol, le module photovoltaïque bifacial (1) étant associé au tube de torsion (2) au moyen d'une fixation à joint le long d'un des côtés du module solaire bifacial de telle manière que le module solaire se déplace conjointement lorsque le tube de torsion (2) tourne ;
le procédé comprenant l'actionnement du tube de torsion (2) pour le positionnement progressif du module photovoltaïque biface (1) de telle manière que soit une face avant (11) soit une face arrière (12) du module photovoltaïque biface (1), fait face au soleil de l'aube à midi ;
dans lequel la face avant (11) fait face au soleil de l'aube à midi et la face arrière (12) fait face au soleil de midi au coucher du soleil.

2. Procédé selon la revendication 1, comprenant en outre les étapes suivantes :
- de l'aube à midi, le suiveur solaire démarre le mode de suivi solaire de telle sorte qu'une face avant (11) du module photovoltaïque bifacial (1) fait face au soleil, en commençant par le bas à partir d'une position 0° et en se positionnant progressivement à -90° par rapport à l'axe longitudinal du montant (3) à midi ;
- après midi, le module biface (1) est déplacé de 180° d'ouest en est, jusqu'à se positionner à +90°, de sorte qu'une face arrière (12) du module bifacial (1) fait face au soleil ;
- le positionnement progressif, de midi au coucher du soleil, du module photovoltaïque bifacial (1) avec sa face arrière (12) faisant face au soleil à une position de 90° par rapport à l'axe longitudinal du montant (3).

3. Procédé selon la revendication 2, comprenant en outre l'actionnement du tube de torsion (2) pour le positionnement progressif du module photovoltaïque biface (1) de telle manière que soit la face avant (11) soit la face arrière (12) du module photovoltaïque biface (1) fait face au soleil de midi au coucher du soleil.

4. Procédé selon l'une ou l'autre des revendications 1 à 3, comprenant en outre l'actionnement du tube de torsion (2) pour l'agencement du module photovoltaïque bifacial (1) essentiellement orthogonal par rapport au montant (3) dans le cas où des vents à grande vitesse sont déterminés.

5. Procédé selon la revendication 4, comprenant en outre l'actionnement du tube de torsion (2) pour le positionnement du module photovoltaïque bifacial (1) à une limite angulaire vers l'est dans le cas où la direction du vent est déterminée comme venant principalement de l'est.

6. Procédé selon la revendication 5, comprenant en outre l'actionnement du tube de torsion (2) pour le positionnement du module photovoltaïque bifacial (1) à une limite angulaire vers l'ouest dans le cas où la direction du vent est déterminée comme venant principalement de l'ouest.
